(19) **Europäisches Patentamt / European Patent Office / Office européen des brevets**

(11) **EP 4 697 723 A1**

(12) **EUROPEAN PATENT APPLICATION**
published in accordance with Art. 153(4) EPC

(43) Date of publication:
**18.02.2026 Bulletin 2026/08**

(21) Application number: **24787782.2**

(22) Date of filing: **30.01.2024**

(51) International Patent Classification (IPC):
**H04N 19/60** (2014.01)    **H04N 19/176** (2014.01)

(52) Cooperative Patent Classification (CPC):
**H04N 19/91; H04N 19/119; H04N 19/12; H04N 19/122; H04N 19/124; H04N 19/13; H04N 19/157; H04N 19/176; H04N 19/18; H04N 19/60**

(86) International application number:
**PCT/CN2024/074646**

(87) International publication number:
**WO 2024/212676 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.04.2023 CN 202310428833**

(71) Applicant: **Tencent Technology (Shenzhen) Company Limited**
**Shenzhen, Guangdong 518057 (CN)**

(72) Inventor: **WANG, Liqiang**
**Shenzhen, Guangdong 518057 (CN)**

(74) Representative: **AWA Sweden AB**
**Matrosgatan 1**
**Box 5117**
**200 71 Malmö (SE)**

(54) **METHOD AND APPARATUS FOR VIDEO ENCODING AND DECODING, COMPUTER-READABLE MEDIUM AND ELECTRONIC DEVICE**

(57)    Provided in embodiments of the present application are a method and an apparatus for video encoding and decoding, a computer-readable medium and an electronic device. The video decoding method comprises: obtaining block division information corresponding to a to-be-decoded coding block from a code stream, wherein the block division information comprises information of a target sub-block needing entropy decoding, and the target sub-block is obtained by dividing the coding block according to a residual block corresponding to the coding block; decoding in the code stream to obtain information of at least one transformation sub-block obtained by dividing the target sub-block; performing entropy decoding and inverse quantization on the at least one transformation sub-block based on the information of the at least one transformation sub-block to obtain an inverse quantization coefficient sub-block corresponding to the at least one transformation sub-block; and performing inverse transformation on the inverse quantization coefficient sub-block corresponding to the at least one transformation sub-block, and generating a reconstruction residual error corresponding to the coding block according to results of the inverse transformation, wherein a residual error of the area in the coding block excluding the target sub-block is inferred to be zero.

FIG. 1

**Description**

RELATED APPLICATION

This application claims priority to Chinese Patent Application No. 202310428833.7, entitled "VIDEO ENCODING METHOD AND APPARATUS, VIDEO DECODING METHOD AND APPARATUS, COMPUTER-READABLE MEDIUM, AND ELECTRONIC DEVICE" filed with the China National Intellectual Property Administration on April 13, 2023, which is incorporated by reference in its entirety.

FIELD OF THE TECHNOLOGY

This application relates to the field of computer and communication technologies, and in particular, to a video encoding method and apparatus, a video decoding method and apparatus, a computer-readable medium, and an electronic device.

BACKGROUND OF THE DISCLOSURE

A video codec technology is a technology for compressing and decompressing a video signal. The technology reduces video signal data redundancy to reduce bandwidth or storage space required for data transmission or storage, so that high-efficiency video data transmission and storage are implemented. In a related standard for audio and video, a sub-block transform (SBT for short) technology is to partition, in a particular manner, a coding block into a plurality of sub-blocks for encoding and decoding.

SUMMARY

Embodiments of this application provide a video encoding method and apparatus, a video decoding method and apparatus, a computer-readable medium, and an electronic device. A sub-block obtained by partitioning a coding block may be further partitioned, to adapt to various residual distribution situations, so as to improve sub-block transform performance, and help to improve encoding and decoding performance.

Other features and advantages of this application become clear through the following detailed descriptions, or are partially learned through the practice of this application.

Embodiments of this application provide a video decoding method, including: obtaining, from a bitstream, block partition information corresponding to a to-be-decoded coding block, the block partition information including information about a target sub-block, and the target sub-block being obtained by partitioning the coding block according to a residual block corresponding to the coding block, wherein entropy decoding is to be performed on the target sub-block; decoding, from the bitstream, information about at least one transform sub-block obtained by partitioning the target sub-block; obtaining an inverse quantization coefficient sub-block respectively corresponding to the at least one transform sub-block based on entropy decoding and inverse quantizing the at least one transform sub-block with the information about the at least one transform sub-block; and generating a reconstructed residual corresponding to the coding block based on inverse transforming the inverse quantization coefficient sub-block respectively corresponding to the at least one transform sub-block, a residual of an area other than the target sub-block in the coding block is inferred to be zero.

The embodiments of this application further provide a video encoding method, including: obtaining a residual block corresponding to a current to-be-encoded block; determining corresponding block partition information according to the residual block, the block partition information including information about a target sub-block on which entropy coding is to be performed, and the target sub-block being obtained by partitioning the to-be-encoded block according to the residual block corresponding to the to-be-encoded block; obtaining at least one transform sub-block based on partitioning the target sub-block; and obtaining a quantization coefficient block based on transforming and quantizing the at least one transform sub-block, and encoding based on the quantization coefficient block.

The embodiments of this application further provide a video decoding apparatus, including: an obtaining unit, configured to obtain, from a bitstream, block partition information corresponding to a to-be-decoded coding block, the block partition information including information about a target sub-block, and the target sub-block being obtained by partitioning the coding block according to a residual block corresponding to the coding block, wherein entropy decoding is to be performed on the target sub-block; a decoding unit, configured to decode, from the bitstream, information about at least one transform sub-block obtained by partitioning the target sub-block, and obtain an inverse quantization coefficient sub-block respectively corresponding to the at least one transform sub-block based on entropy decoding and inverse quantizing the at least one transform sub-block with the information about the at least one transform sub-block; and a processing unit, configured to generate a reconstructed residual corresponding to the coding block based on inverse transforming the inverse quantization coefficient sub-block respectively corresponding to the at least one transform sub-block, a residual of an area other than the target sub-block in the coding block is inferred to be zero.

The embodiments of this application further provide a video encoding apparatus, including: an obtaining unit, configured to obtain a residual block corresponding to a current to-be-encoded block; a determining unit, configured to determine corresponding block partition information according to the residual block, the block partition information including information about a target sub-block on which entropy coding is to be performed, and the target sub-block being obtained by partitioning the to-be-encoded block according to the residual block corresponding to the to-be-encoded block; a partitioning unit, configured to obtain at least one transform sub-block based on partitioning the target sub-block; and a coding unit, configured to obtain a quantization coefficient block based on transforming and quantizing the at least one transform sub-block, and encode based on the quantization coefficient block.

The embodiments of this application further provide a non-volatile computer-readable medium, having a computer program stored therein, the computer program, when executed by a processor, implementing the video decoding method or the video encoding method according to the foregoing embodiments.

The embodiments of this application further provide an electronic device, including: one or more processors; a storage apparatus, configured to store one or more computer programs, the one or more computer programs, when executed by the one or more processors, causing the electronic device to implement the video decoding method or the video encoding method according to the foregoing embodiments.

The embodiments of this application further provide a computer program product. The computer program product includes a computer program, where the computer program is stored in a computer-readable storage medium. A processor of an electronic device reads the computer program from the computer-readable storage medium and executes the computer program, to cause the electronic device to perform the video decoding method or the video encoding method according to the foregoing various embodiments.

The embodiments of this application further provide a non-volatile computer-readable storage medium, having a bitstream stored therein, and the bitstream being generated by using the video encoding method according to the embodiments of this application.

In the technical solutions provided in some embodiments of this application, block partition information corresponding to a to-be-decoded coding block is obtained, to determine information about a target sub-block on which entropy decoding needs to be performed; then decoding is performed in a bitsream, to obtain information about at least one transform sub-block obtained by partitioning the target sub-block; further, entropy decoding and inverse quantization processing are performed based on the information about the at least one transform sub-block, to obtain an inverse quantization coefficient sub-block corresponding to the at least one transform sub-block; and inverse transform processing is performed on the inverse quantization coefficient sub-block corresponding to the at least one transform sub-block, and a reconstructed residual corresponding to the coding block is generated according to an inverse transform processing result, so that a sub-block obtained by partitioning a coding block may be further partitioned to adapt to various residual distribution situations, so as to improve sub-block transform performance, and help to improve encoding and decoding performance.

The foregoing general descriptions and the following detailed descriptions are merely for exemplary and explanatory purposes, and cannot limit this application.

BRIEF DESCRIPTION OF THE DRAWINGS

FIG. 1 is a schematic diagram of an exemplary system architecture to which a technical solution according to an embodiment of this application may be applied.

FIG. 2 is a schematic diagram of an arrangement mode of a video encoding apparatus and a video decoding apparatus in a streaming transmission system according to an embodiment of this application.

FIG. 3 is a basic flowchart of a video encoder according to an embodiment of this application.

FIG. 4 is a schematic diagram of a partition mode of an SBT according to an embodiment of this application.

FIG. 5 is a schematic diagram of combinations of transform modes in an SBT according to an embodiment of this application.

FIG. 6 is a flowchart of a video decoding method according to some embodiments of this application.

FIG. 7 is a flowchart of a video encoding method according to some embodiments of this application.

FIG. 8A to FIG. 8J are schematic diagrams of sub-block partition modes according to some embodiments of this application.

FIG. 9A is a schematic diagram of combinations of transform modes of a transform block according to some embodiments of this application.

FIG. 9B-1 and FIG. 9B-2 are schematic diagrams of some other combinations of transform modes of a transform block according to some embodiments of this application.

FIG. 9C-1 and FIG. 9C-2 are schematic diagrams of some other combinations of transform modes of a transform block according to some embodiments of this application.

FIG. 9D-1 and FIG. 9D-2 are schematic diagrams of some other combinations of transform modes of a transform block according to some embodiments of this application.

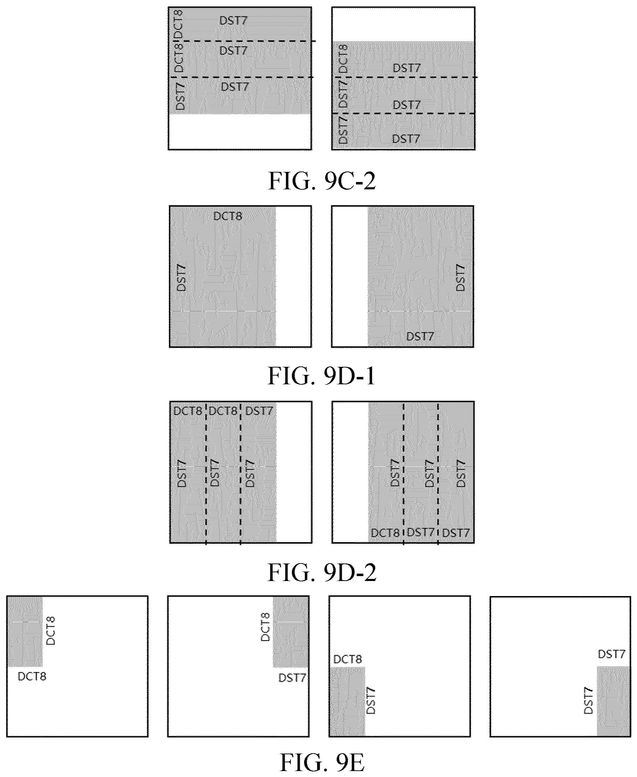

FIG. 9E is a schematic diagram of some other combinations of transform modes of a transform block according to some embodiments of this application.

FIG. 9F-1 and FIG. 9F-2 are schematic diagrams of some other combinations of transform modes of a transform block according to some embodiments of this application.

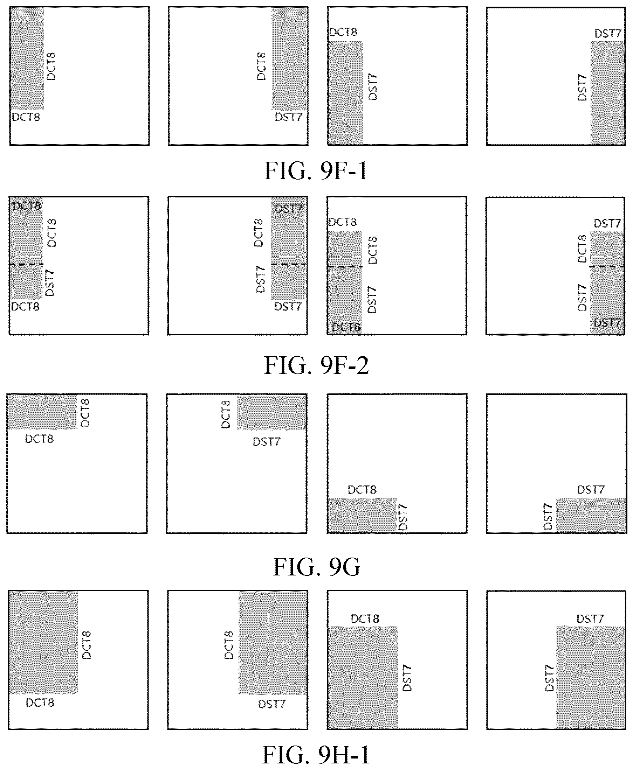

FIG. 9G is a schematic diagram of some other combinations of transform modes of a transform block according to some embodiments of this application.

FIG. 9H-1 and FIG. 9H-2 are schematic diagrams of some other combinations of transform modes of a transform block according to some embodiments of this application.

FIG. 9I-1 and FIG. 9I-2 are schematic diagrams of some other combinations of transform modes of a transform block according to some embodiments of this application.

FIG. 9J-1 and FIG. 9J-2 are schematic diagrams of some other combinations of transform modes of a transform block according to some embodiments of this application.

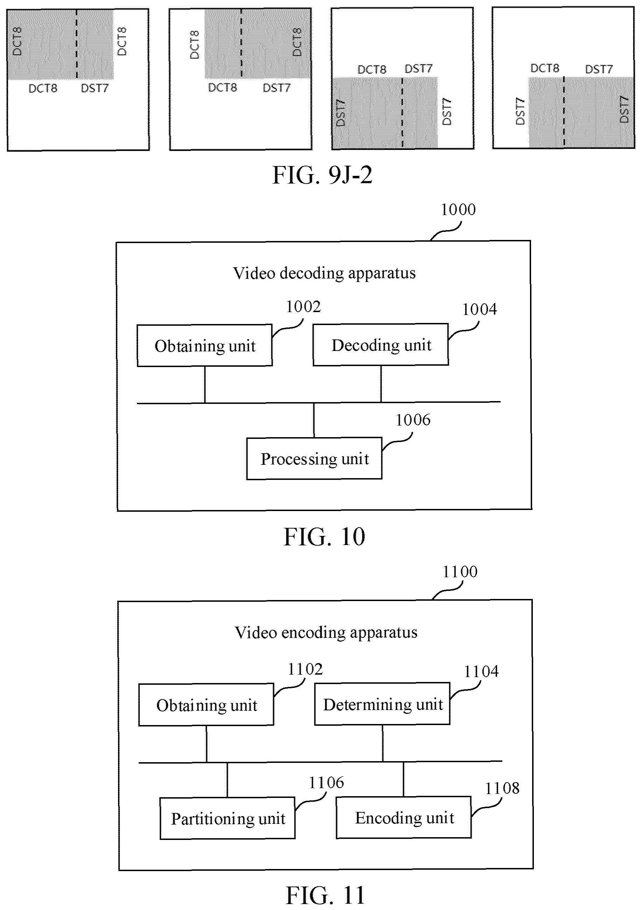

FIG. 10 is a block diagram of a video decoding apparatus according to some embodiments of this application.

FIG. 11 is a block diagram of a video encoding apparatus according to some embodiments of this application.

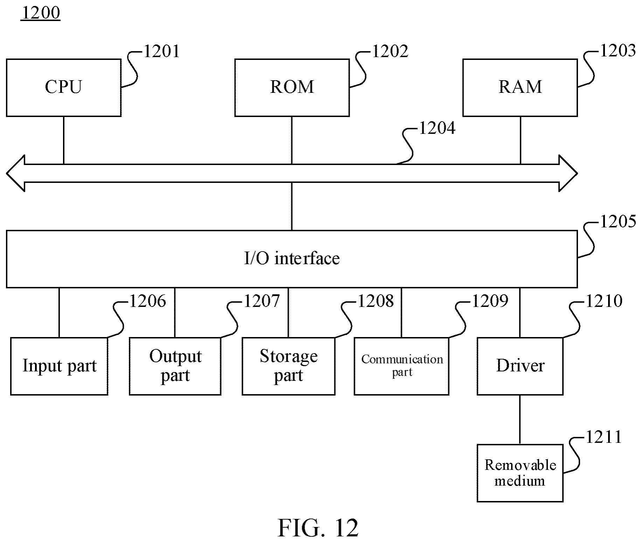

FIG. 12 is a schematic diagram of a structure of a computer system of an electronic device configured to implement an embodiment of this application.

DESCRIPTION OF EMBODIMENTS

Exemplary implementations are described more comprehensively with reference to the accompanying drawings. However, the exemplary implementations can be implemented in various forms, and are not to be understood as being limited to these examples. Conversely, the implementations are provided to make this application more comprehensive and complete, and comprehensively convey the idea of the exemplary implementations to a person skilled in the art.

In addition, the features, structures, or characteristics described in this application may be combined in one or more embodiments in any suitable mode. In the following descriptions, many details are provided for comprehensive understanding of embodiments of this application. However, a person skilled in the art is to be aware that, technical solutions in this application may be implemented without using all detailed features in the embodiments, and one or more specific details may be omitted, or another method, element, apparatus, or operation may be used.

The block diagrams shown in the accompany drawings are merely functional entities and do not necessarily correspond to physically independent entities. To be specific, the functional entities may be implemented in a software form, or in one or more hardware modules or integrated circuits, or in different networks and/or processor apparatuses and/or microcontroller apparatuses.

The flowcharts shown in the accompanying drawings are merely exemplary descriptions, do not necessarily include all contents and operations/steps, and are not necessarily executed in the described orders. For example, some operations/steps may be further divided, while some operations/steps may be combined or partially combined. Therefore, an actual execution order may change according to an actual case.

"A plurality of" mentioned herein means two or more. "And/or" describes an association relationship for describing associated objects and represents that three relationships may exist. For example, A and/or B may represent the following three cases: Only A exists, both A and B exist, and only B exists. The character "/" generally indicates an "or" relationship between associated objects before and after the character.

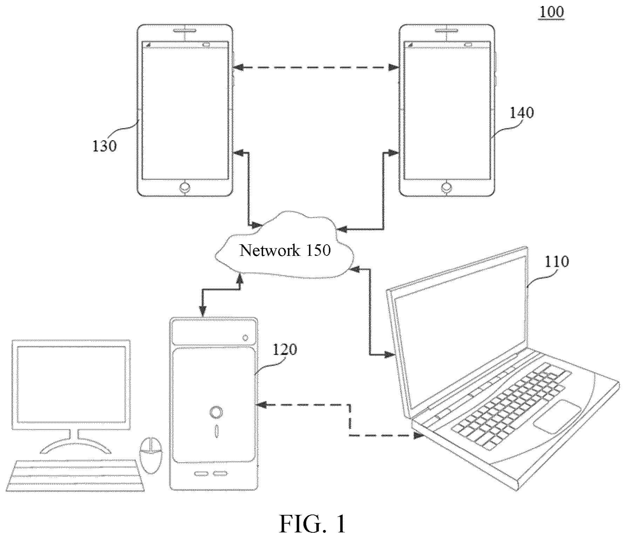

FIG. 1 is a schematic diagram of an exemplary system architecture to which a technical solution of an embodiment of this application may be applied.

As shown in FIG. 1, the system architecture 100 includes a plurality of terminal apparatuses, and the terminal apparatuses may communicate with each other via, for example, a network 150. For example, the system architecture 100 may include a first terminal apparatus 110 and a second terminal apparatus 120 that are interconnected via the network 150. In the embodiment of FIG. 1, the first terminal apparatus 110 and the second terminal apparatus 120 perform unidirectional data transmission.

For example, the first terminal apparatus 110 may encode video data (for example, a video picture stream collected by the terminal apparatus 110) and transmit the encoded video data to the second terminal apparatus 120 via the network 150. The encoded video data is transmitted in a form of one or more encoded video bitstreams. The second terminal apparatus 120 may receive the encoded video data from the network 150, decode the encoded video data to restore the video data, and display a video picture according to the restored video data.

In some embodiments of this application, the system architecture 100 may include a third terminal apparatus 130 and a fourth terminal apparatus 140 that perform bidirectional transmission of encoded video data, where the bidirectional transmission may occur, for example, during a video conference. For bidirectional data transmission, each terminal apparatus of the third terminal apparatus 130 and the fourth terminal apparatus 140 may encode video data (for example, a video picture stream collected by the terminal apparatus) and transmit the encoded video data to the other terminal apparatus of the third terminal apparatus 130 and the fourth terminal apparatus 140 via the network 150. Each terminal apparatus of the third terminal apparatus 130 and the fourth terminal apparatus 140 may further receive the encoded video data transmitted by the other terminal apparatus of the third terminal apparatus 130 and the fourth terminal apparatus 140, decode the encoded video data to restore the video data, and display a video picture on an accessible display apparatus according to the restored video data.

In the embodiment shown in FIG. 1, the first terminal apparatus 110, the second terminal apparatus 120, the third terminal apparatus 130, and the fourth terminal apparatus 140 may be servers or terminals, but the principle disclosed in this application may not be limited thereto.

The server may be an independent physical server, or may be a server cluster or a distributed system including a plurality of physical servers, or may be a cloud server providing a basic cloud computing service such as a cloud service, a cloud database, cloud computing, a cloud function, cloud storage, a network service, cloud communication, a middleware service, a domain name service, a security service, a content delivery network (CDN), big data, and an artificial intelligence platform. The terminal may be a smartphone, a tablet computer, a notebook computer, a desktop computer, a smart speaker, an intelligent voice interaction device, a smart watch, a smart home appliance, a vehicle-mounted terminal, a flight vehicle, or the like, but is not limited thereto.

The network 150 shown in FIG. 1 represents any quantity of networks configured to transmit coded video data among the first terminal apparatus 110, the second terminal apparatus 120, the third terminal apparatus 130, and the fourth terminal apparatus 140, and includes, for example, a wired and/or wireless communication network. The network 150 may exchange data in a circuit switching channel and/or a packet switching channel. The network may include a telecommunication network, a local area network, a wide area network, and/or the Internet. For an objective of this application, unless explained below, an architecture and a topology of the network 150 may be immaterial to operations disclosed in this application.

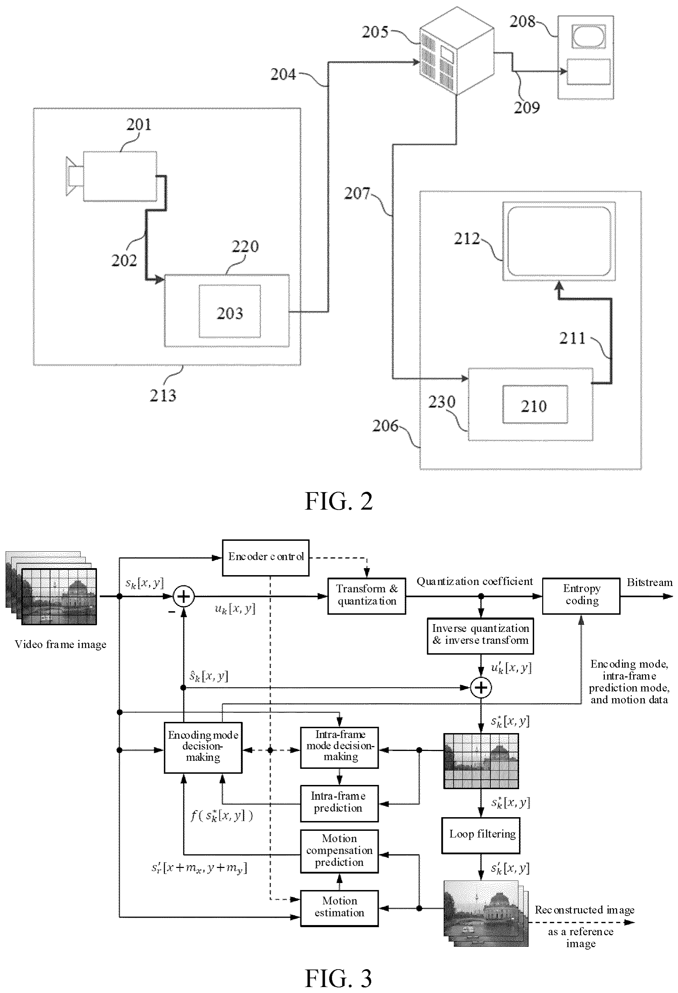

In some embodiments of this application, FIG. 2 shows an arrangement mode of a video encoding apparatus and a video decoding apparatus in a streaming transmission environment. The subject matter disclosed in this application is equally applicable to another application supporting a video, including, for example, a video conference, a digital television (TV), or storing a compressed video on a digital medium including a CD, a DVD, a memory stick, and the like.

A streaming transmission system may include a collection subsystem 213. The collection subsystem 213 may include a video source 201 such as a digital camera. The video source creates an uncompressed video picture stream 202. In an embodiment, the video picture stream 202 includes a sample photographed by the digital camera. Compared with encoded video data 204 (or an encoded video bitstream 204), the video picture stream 202 is depicted as a bold line to emphasize a video picture stream with a high data volume. The video picture stream 202 may be processed by an electronic apparatus 220, where the electronic apparatus 220 includes a video encoding apparatus 203 coupled to the video source 201. The video encoding apparatus 203 may include hardware, software, or a combination of the software and the hardware to implement or conduct various aspects of the disclosed subject matter described in more detail below. Compared with the video picture stream 202, the encoded video data 204 (or the encoded video bitstream 204) is depicted as a thin line to emphasize the encoded video data 204 (or the encoded video bitstream 204) with a relatively low data volume and may be stored on a streaming transmission server 205 for future use. One or more streaming transmission client subsystems, for example, a client subsystem 206 and a client subsystem 208 in FIG. 2, may access the streaming transmission server 205 to retrieve a copy 207 and a copy 209 of the encoded video data 204. The client subsystem 206 may include, for example, a video decoding apparatus 210 in an electronic apparatus 230. The video decoding apparatus 210 decodes the transmitted copy 207 of the encoded video data, and generates an output video picture stream 211 that may be presented on a display 212 (for example, a display screen) or another presentation apparatus. In some streaming transmission systems, the encoded video data 204, the video data 207, and the video data 209 (for example, a video bitstream) may be encoded according to some video encoding/compression standards.

The electronic apparatus 220 and the electronic apparatus 230 may include other components not shown in the figure. For example, the electronic apparatus 220 may include a video decoding apparatus, and the electronic apparatus 230 may further include a video encoding apparatus.

In some embodiments of this application, international video coding standards such as high efficiency video coding (HEVC) and versatile video coding (VVC), and a Chinese national video coding standards such as an audio video coding standard (AVS) are used as examples. After a video frame image is inputted, the video frame image is partitioned into several non-overlapping processing units according to a block size, and a similar compression operation is performed on each processing unit. The processing unit is referred to as a coding tree unit (CTU) or is referred to as a largest coding unit (LCU). The CTU may be further partitioned, to obtain one or more basic coding units (CU). The CU is a most basic element in an encoding phase.

In some other embodiments, the processing unit may also be referred to as a coding tile, and is a rectangular area of a multimedia data frame that can be independently decoded and encoded. In an AV1 standard, the coding tile may be further partitioned, to obtain one or more superblocks (SB for short). The SB is a starting point for block partition, and may be further partitioned to obtain one or more blocks (B for short). Each block is a most basic element in an encoding phase. In some embodiments, one SB may include several Bs.

The foregoing partition mode for the video frame image may be referred to as a block partition structure. The following describes some concepts in an encoding process.

Predictive coding: The predictive coding includes modes such as intra-frame prediction and inter-frame prediction, and a residual video signal is obtained after prediction is performed on an original video signal by using a selected reconstructed video signal. An encoder side is required to select a predictive coding mode for a current coding unit (or coding block), and inform a decoder side. The intra-frame prediction means that a predicted signal is from an area that has been encoded and reconstructed and that is in the same image. The inter-frame prediction means that a predicted signal is from another image (referred to as a reference image) that has been encoded and that is different from a current image.

Transform & quantization: Transform operations such as discrete Fourier transform (DFT) and discrete cosine transform (DCT) are performed on a residual video signal, to convert the signal into a transform domain, which is referred to as a transform coefficient. A lossy quantization operation is further performed on the transform coefficient, and certain information is lost, so that a quantized signal facilitates compression expression. In some video coding standards, there may be more than one transform mode to be selected. Therefore, the encoder side also needs to select one transform mode for the current coding unit (or coding block), and inform the decoder side. Fineness of the quantization is usually determined by a quantization parameter (QP). A larger QP indicates that coefficients with a larger value range are to be quantized into the same output, which usually brings greater distortion and a lower bit rate. On the contrary, a smaller QP indicates that coefficients with a smaller value range are to be quantized into the same output, which generally brings less distortion and a higher bit rate.

Entropy coding or statistical coding: Statistical compression coding is performed on a quantized transform-domain signal according to a frequency at which each value appears, and finally a binary (0 or 1) compressed stream is outputted. Meanwhile, entropy coding also needs to be performed on other information, for example, a selected coding mode and motion vector data, generated through encoding, to reduce a bit rate. Statistical coding is a lossless coding mode that can effectively reduce a bit rate required for expressing the same signal. A common statistical coding mode includes variable length coding (VLC for short) or context-based adaptive binary arithmetic coding (CABAC for short).

A context-based adaptive binary arithmetic coding (CABAC) process mainly includes three operations: binarization, context modeling, and binary arithmetic coding. After binarization processing is performed on an inputted syntax element, binary data may be encoded by using a conventional encoding mode and a bypass coding mode. The bypass coding mode does not require the assignment of a specific probability model to each binary bit, and an inputted binary bit bin value is directly encoded by using a simple bypass encoder, to accelerate the entire encoding and decoding process. Generally, different syntax elements are not completely independent of each other, and the same syntax element has a specific memory. Therefore, according to a conditional entropy theory, conditional encoding is performed by using other encoded syntax elements, and encoding performance can be further improved compared with independent coding or memoryless coding. Encoded symbolic information used as a condition is referred to as a context. In a conventional encoding mode, binary bits of a syntactic element sequentially enter a context modeler. An encoder allocates an appropriate probability model to each inputted binary bit according to a value of a syntax element or a binary bit that has been encoded previously. This process is context modeling. A context model corresponding to a syntax element may be located by using a context index increment (ctxIdxInc) and a context index start (ctxIdxStart). After the bin value and the allocated probability model are both sent to a binary arithmetic encoder for encoding, the context model needs to be updated according to the bin value. This is an adaptive process in the encoding.

Loop filtering: A reconstructed image is obtained through operations of inverse quantization, inverse transform, and predictive compensation on a changed and quantized signal. Compared with an original image, in the reconstructed image, some information is different from that in the original image due to the impact of quantization, that is, the reconstructed image causes a distortion. Therefore, a filtering operation may be performed on the reconstructed image, for example, by using a filter such as a deblocking filter (DB), a sample adaptive pixel offset (SAO) filter, or an adaptive loop filter (ALF), to effectively reduce a degree of distortion caused by quantization. Because these filtered reconstructed images are used as a reference for subsequently encoded images to predict future image signals, the foregoing filtering operation is also referred to as loop filtering, that is, a filtering operation in a coding loop.

In some embodiments of this application, FIG. 3 is a basic flowchart of a video encoder. In this process, intra-frame prediction is used as an example for description. A difference operation is performed between an original image signal $s_k[x, y]$ and a predicted image signal $\hat{s}_k[x, y]$ to obtain a residual signal $u_k[x, y]$, and the residual signal $u_k[x, y]$ is transformed and quantized to obtain a quantization coefficient. The quantization coefficient is subjected to entropy coding to obtain a coded bitstream, and is further subjected to inverse quantization and inverse transform processing to obtain a reconstructed residual signal $u'_k[x,y]$. The predicted image signal $\hat{s}_k[x, y]$ is superimposed with the reconstructed residual signal $u'_k[x,y]$ to generate an image signal $s^*_k[x,y]$. The image signal $s^*_k[x,y]$ is inputted to an intra-frame mode decision module and an intra-frame prediction module for intra-frame prediction processing, and is further subjected to loop filtering, to output a reconstructed image signal $s'_k[x,y]$. The reconstructed image signal $s'_k[x,y]$ may be used as a reference image for a next frame for motion estimation and motion compensation prediction. Then, a predicted image signal $\hat{s}_k[x, y]$ of the next frame is obtained based on a result $s'_r[x + m_x, y + m_y]$ of the motion compensation prediction and a result $f(s^*_k[x,y])$ of the intra-frame prediction. The above process is repeated until the coding is completed.

Based on the foregoing coding process, on the decoder side, for each coding unit (or coding block), after a compressed bit stream (namely, a bitstream) is obtained, entropy decoding is performed to obtain various mode information and quantization coefficients. Then, inverse quantization processing and inverse transform processing are performed on the quantization coefficients to obtain a residual signal. In addition, a predicted signal corresponding to the coding unit (or the coding block) may be obtained according to known coding mode information, then the residual signal may be added to the predicted signal, to obtain a reconstructed signal, and then the reconstructed signal is subjected to operations such as loop filtering to generate a final output signal.

In the foregoing coding process, because there is a relatively large error in a prediction method, the residual signal needs to be transmitted to compensate for a predicted image, thereby improving quality of a reconstructed image. Therefore, residual processing is an important processing process in a hybrid encoding framework. In the process shown in FIG. 3, the residual signal is a difference between the original image signal and the predicted image signal, that is, $u_k[x, y] = s_k[x, y] - \hat{s}_k[x, y]$. In video coding standards such as HEVC, VVC, and AVS3, the above-mentioned processing such as transform (or transform skip) and quantization is performed on the residual signal.

The transform processing is mainly to perform energy concentration on a residual signal through transform based on the relevance of the residual signal, to make energy concentrate at a relatively small low-frequency coefficient, that is, most coefficients have relatively small values. After processing by a subsequent quantization module, the relatively small coefficient values become zero, thereby greatly reducing costs of coding the residual. Because of diversity of residual signal distribution, a single DCT cannot adapt to all residual characteristics. Therefore, transform cores such as DST7 and DCT8 are introduced to a transform module, and different transform cores may be used for horizontal transform and vertical transform. An adaptive multiple core transform (AMT) technology is used as an example. A transform combination that may be selected for a residual block includes: (DCT2, DCT2), (DCT8, DCT8), (DCT8, DST7), (DST7, DCT8), and (DST7, DST7). A specific transform combination to be selected for a residual block needs to be decided on the encoder side by using rate-distortion optimization (RDO). Because there are also some residual signals that have relatively weak correlation, encoding efficiency is higher when transform is skipped. In other words, a residual transform process is skipped, and quantization processing is directly performed on the residual.

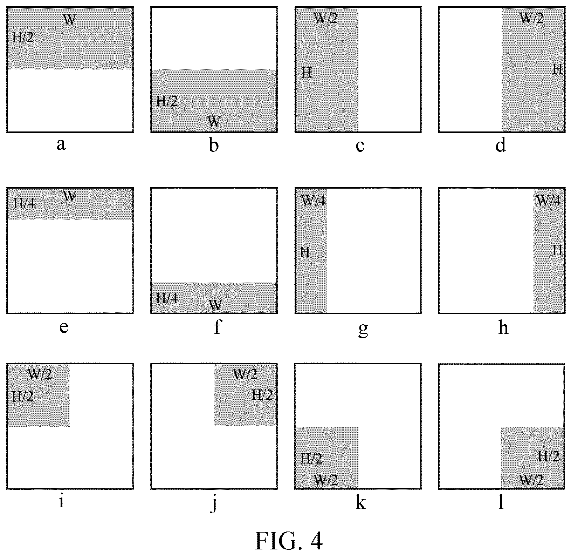

When transform coding is performed, there is a sub-block transform (SBT) technology. FIG. 4 shows 12 modes corresponding to the SBT. A width and a height of a coding block are respectively W and H, and a size of a sub-block is 1, 1/2, or 1/4 of a size of the coding block in which the sub-block is located in a corresponding direction. In the SBT technology, transform coding is performed only on a gray part in FIG. 4, and the other part is forcibly zeroed out. For a gray block, no further partition is performed, and transform processing and quantization processing are directly performed.

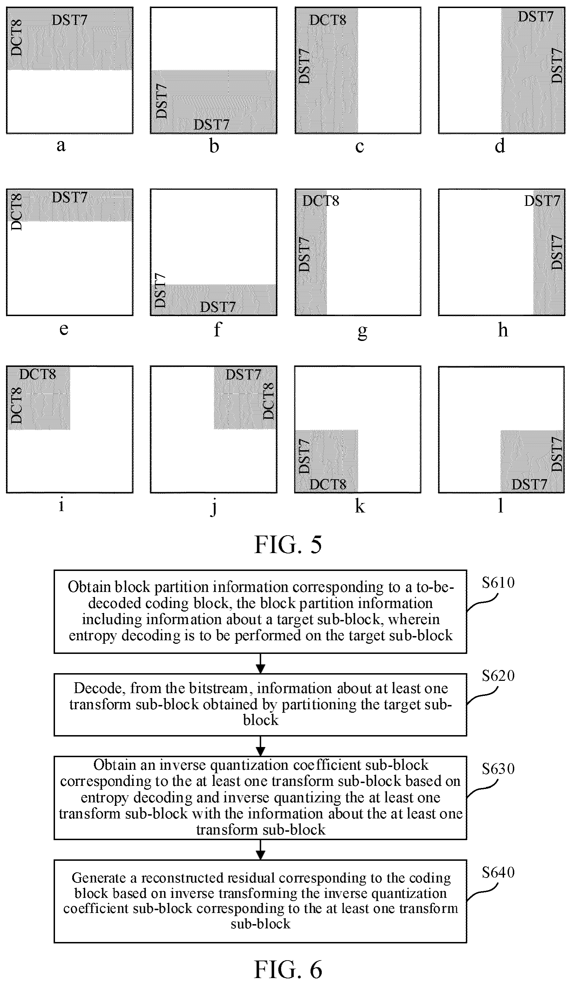

Transform combinations (namely, combinations of horizontal-direction transform and vertical-direction transform) corresponding to the 12 sub-block partition modes shown in FIG. 4 are shown in FIG. 5. For example, for a mode a, a width of the sub-block is equal to the width W of the coding block, and a height of the sub-block is equal to 1/2 of the height of the coding block, namely, H/2. A corresponding transform combination is horizontal transform DST7 and vertical transform DCT8. Correspondingly, only a coefficient in a gray area needs to be decoded on a decoder side, and then inverse quantization and inverse transform are performed. A residual in the other area is set to zero by default.

However, a partition mode of the SBT technology mentioned in the foregoing solution is not flexible enough, and various residual distribution situations cannot be effectively handled, affecting encoding and decoding efficiency to some extent. Based on this, embodiments of this application provide a new video encoding solution and a new decoding solution. A sub-block obtained by partitioning a coding block may be further partitioned, to adapt to various residual distribution situations, so as to improve sub-block transform performance, and help to improve encoding and decoding performance.

Implementation details of the technical solutions of the embodiments of this application are described below in detail.

FIG. 6 is a flowchart of a video decoding method according to some embodiments of this application. The video decoding method may be performed by a device with a computing processing function, for example, may be performed by a terminal device or a server. Referring to FIG. 6, the video decoding method includes at least the following operations S610 to S640, which are described in detail as follows:

Operation S610: Obtain, from a bitstream, block partition information corresponding to a to-be-decoded coding block, the block partition information including information about a target sub-block, and the target sub-block being obtained by partitioning the coding block according to a residual block corresponding to the coding block, wherein entropy decoding is to be performed on the target sub-block.

In some embodiments, the target sub-block is an area that is in the coding block and in which a residual needs to be encoded and transmitted, and a residual in an area other than the target sub-block in the coding block does not need to be encoded and transmitted. In other words, in the coding block, only a residual of the target sub-block needs to be encoded and transmitted to a decoder side, and the decoder side considers by default that the residual in the area other than the target sub-block is zero.

In some embodiments of this application, a video image frame sequence includes a series of images. Each image may be further partitioned into slices. A slice may be further partitioned into a series of LCUs (or CTUs), and an LCU includes several CUs. A video image frame is encoded by using a block as a unit. In some new video coding standards, for example, in an H.264 standard, a macroblock (MB) is introduced, and the macroblock may be further partitioned into a plurality of prediction blocks that may be configured for predictive coding. In other standards such as an HEVC, basic concepts such as a coding unit CU, a prediction unit (PU), and a transform unit (TU) are used, various block units are classified by function, and a new tree-based structure is used for description. For example, a CU may be partitioned into smaller CUs according to a quadtree, and the smaller CUs may be further partitioned, to form a quadtree. The coding block in the embodiments of this application may be a CU or a block smaller than the CU, for example, a smaller block obtained by partitioning the CU.

In some embodiments, the decoder side may obtain the block partition information from the bitstream. The block partition information includes the information about the target sub-block obtained by partitioning the to-be-decoded coding block. For example, the information about the target sub-block includes width information and height information of the target sub-block. The width information of the target sub-block includes a first ratio of a width of the target sub-block to a width of the coding block. The height information of the target sub-block includes a second ratio of a height of the target sub-block to a height of the coding block. In some embodiments, a value of the first ratio and a value of the second ratio each are any one of the following: 1, 1/4, 1/2, 3/4, and 1/8.

In some embodiments, the width of the target sub-block may be 1/4 of the width of the coding block, and the height of the target sub-block may be 1/4 of the height of the coding block.

In some embodiments, the width of the target sub-block may be 3/4 of the width of the coding block, and the height of the target sub-block may be 3/4 of the height of the coding block.

In some embodiments, the width of the target sub-block may be equal to the width of the coding block, and the height of the target sub-block may be 3/4 of the height of the coding block.

In some embodiments, the width of the target sub-block may be 3/4 of the width of the coding block, and the height of the target sub-block may be equal to the height of the coding block.

In some embodiments, the width of the target sub-block may be 1/4 of the width of the coding block, and the height of the target sub-block may be 1/2 of the height of the coding block.

In some embodiments, the width of the target sub-block may be 1/4 of the width of the coding block, and the height of the target sub-block may be 3/4 of the height of the coding block.

In some embodiments, the width of the target sub-block may be 1/2 of the width of the coding block, and the height of the target sub-block may be 1/4 of the height of the coding block.

In some embodiments, the width of the target sub-block may be 1/2 of the width of the coding block, and the height of the target sub-block may be 3/4 of the height of the coding block.

In some embodiments, the width of the target sub-block may be 3/4 of the width of the coding block, and the height of the target sub-block may be 1/4 of the height of the coding block.

In some embodiments, the width of the target sub-block may be 3/4 of the width of the coding block, and the height of the target sub-block may be 1/2 of the height of the coding block.

In some embodiments, the information about the target sub-block may further include location information of the target sub-block, and the location information is configured for indicating a location of the target sub-block in the coding block. For example, the location of the target sub-block in the coding block includes any one of the following: an upper left corner of the coding block, an upper right corner of the coding block, a lower left corner of the coding block, a lower right corner of the coding block, an upper side of the coding block, a lower side of the coding block, a left side of the coding block, and a right side of the coding block.

Operation S620: decode, from the bitstream, information about at least one transform sub-block obtained by partitioning the target sub-block.

In this embodiment of this application, the target sub-block obtained by partitioning the coding block may be further partitioned, for example, partitioned into smaller transform sub-blocks, to adapt to various residual distribution situations. Certainly, the target sub-block may alternatively be partitioned to obtain only one transform sub-block, that is, the target sub-block is not partitioned.

In some embodiments, if the target sub-block is further partitioned to obtain transform sub-blocks, a size of the transform sub-block obtained by partitioning the target sub-block may meet the following condition: at least one of a height and a width of the transform sub-block is an integer power of 2. In this way, hardware implementation costs can be reduced.

Based on the foregoing condition, if the width of the target sub-block is 3/4 of the width of the coding block and the height of the target sub-block is 3/4 of the height of the coding block, the target sub-block is partitioned into four transform sub-blocks. In some embodiments, a width of the 1st transform sub-block of the four transform sub-blocks is 1/2 of the width of the coding block, and a height of the 1st transform sub-block is 1/2 of the height of the coding block; a width of the 2nd transform sub-block is 1/4 of the width of the coding block, and a height of the 2nd transform sub-block is 1/2 of the height of the coding block; a width of the 3rd transform sub-block is 1/2 of the width of the coding block, and a height of the 3rd transform sub-block is 1/4 of the height of the coding block; and a width of the 4th transform sub-block is 1/4 of the width of the coding block, and a height of the 4th transform sub-block is 1/4 of the height of the coding block.

If the width of the target sub-block is equal to the width of the coding block and the height of the target sub-block is 3/4 of the height of the coding block, the target sub-block is partitioned into three transform sub-blocks in a height direction. In some embodiments, widths of the three transform sub-blocks each are equal to the width of the coding block, and heights of the three transform sub-blocks each are 1/4 of the height of the coding block.

If the width of the target sub-block is 3/4 of the width of the coding block and the height of the target sub-block is equal to the height of the coding block, the target sub-block is partitioned into three transform sub-blocks in a width direction. In some embodiments, heights of the three transform sub-blocks each are equal to the height of the coding block, and widths of the three transform sub-blocks each are 1/4 of the width of the coding block.

If the width of the target sub-block is 1/4 of the width of the coding block and the height of the target sub-block is 3/4 of the height of the coding block, the target sub-block is partitioned into two transform sub-blocks in a height direction. In some embodiments, a width of the 1st transform sub-block of the two transform sub-blocks is 1/4 of the width of the coding block, and a height of the 1st transform sub-block is 1/2 of the height of the coding block; and a width of the 2nd transform sub-block is 1/4 of the width of the coding block, and a height of the 2nd transform sub-block is 1/4 of the height of the coding block.

If the width of the target sub-block is 1/2 of the width of the coding block and the height of the target sub-block is 3/4 of the height of the coding block, the target sub-block is partitioned into two transform sub-blocks in a height direction. In some embodiments, a width of the 1st transform sub-block of the two transform sub-blocks is 1/2 of the width of the coding block, and a height of the 1st transform sub-block is 1/2 of the height of the coding block; and a width of the 2nd transform sub-block is 1/2 of the width of the coding block, and a height of the 2nd transform sub-block is 1/4 of the height of the coding block.

If the width of the target sub-block is 3/4 of the width of the coding block and the height of the target sub-block is 1/4 of the height of the coding block, the target sub-block is partitioned into two transform sub-blocks in a width direction. In some embodiments, a width of the 1st transform sub-block of the two transform sub-blocks is 1/2 of the width of the coding block, and a height of the 1st transform sub-block is 1/4 of the height of the coding block; and a width of the 2nd transform sub-block is 1/4 of the width of the coding block, and a height of the 2nd transform sub-block is 1/4 of the height of the coding block.

If the width of the target sub-block is 3/4 of the width of the coding block and the height of the target sub-block is 1/2 of the height of the coding block, the target sub-block is partitioned into two transform sub-blocks in a width direction. In some embodiments, a width of the 1st transform sub-block of the two transform sub-blocks is 1/2 of the width of the coding block, and a height of the 1st transform sub-block is 1/2 of the height of the coding block; and a width of the 2nd transform sub-block is 1/4 of the width of the coding block, and a height of the 2nd transform sub-block is 1/2 of the height of the coding block.

Operation S630: obtain an inverse quantization coefficient sub-block respectively corresponding to the at least one transform sub-block based on entropy decoding and inverse quantizing the at least one transform sub-block with the information about the at least one transform sub-block.

In this embodiment of this application, after information about a transform sub-block is determined, entropy decoding and inverse quantization processing may be performed according to the information about the transform sub-block, to obtain an inverse quantization coefficient sub-block corresponding to each transform sub-block. In some embodiments, the information about the transform sub-block may also include a width of the transform sub-block, a height of the transform sub-block, location information of the transform sub-block, and the like.

Operation S640: generate a reconstructed residual corresponding to the coding block based on inverse transforming the inverse quantization coefficient sub-block respectively corresponding to the at least one transform sub-block, a residual of an area other than the target sub-block in the coding block is inferred to be zero.

In some embodiments, the performing inverse transform processing on the inverse quantization coefficient sub-block respectively corresponding to the at least one transform sub-block includes: selecting, from set transform modes, a horizontal transform mode and a vertical transform mode corresponding to each inverse quantization coefficient sub-block, the set transform modes including: a DCT2, a DCT5, a DCT8, a DST1, a DST7, and a transform skip mode, and then performing inverse transform processing on each inverse quantization coefficient sub-block according to the horizontal transform mode and the vertical transform mode corresponding to each inverse quantization coefficient sub-block. In other words, in this embodiment, a transform mode of an inverse quantization coefficient sub-block corresponding to a transform sub-block may be flexibly selected from the DCT2, the DCT5, the DCT8, the DST1, the DST7, and the transform skip mode.

In some embodiments, if a first inverse quantization coefficient sub-block whose width is greater than a set threshold exists in the inverse quantization coefficient sub-block corresponding to the at least one transform sub-block, a horizontal transform mode of the first inverse quantization coefficient sub-block is replaced with the DCT2 transform mode. If a second inverse quantization coefficient sub-block whose height is greater than a set threshold exists in the inverse quantization coefficient sub-block corresponding to the at least one transform sub-block, a vertical transform mode of the second inverse quantization coefficient sub-block is replaced with the DCT2 transform mode. With the technical solution of this embodiment, when a size (for example, a height or a width) of an inverse quantization coefficient sub-block corresponding to a transform sub-block is relatively large, the DCT2 transform mode that is more suitable for large'-size residual block transform may be used, to ensure an effect of coefficient transform.

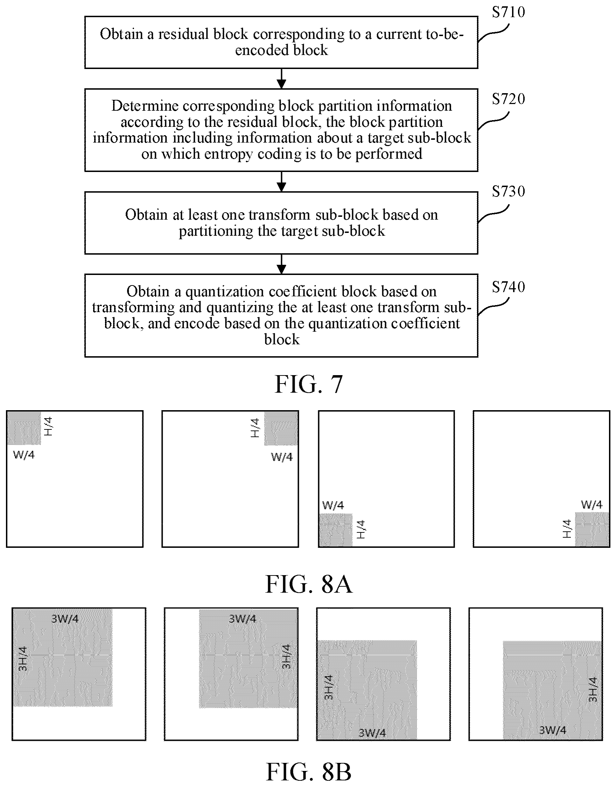

In FIG. 6, the technical solution of this embodiment of this application is described from the perspective of the decoder side. The following describes the technical solution of this embodiment of this application again from the perspective of an encoder side with reference to FIG. 7.

FIG. 7 is a flowchart of a video encoding method according to some embodiments of this application. The video encoding method may be performed by a device with a computing processing function, for example, may be performed by a terminal device or a server. Referring to FIG. 7, the video encoding method includes at least the following operations S710 to S740, which are described in detail as follows:

Operation S710: Obtain a residual block corresponding to a current to-be-encoded block.

In some embodiments, the residual block is a difference between original image information (an original image block) and prediction image information (a prediction block).

Operation S720: Determine corresponding block partition information according to the residual block, the block partition information including information about a target sub-block on which entropy coding is to be performed, and the target sub-block being obtained by partitioning the to-be-encoded block.

In some embodiments, the information about the target sub-block includes width information, height information, and location information of the target sub-block. For details, reference may be made to the technical solution of the foregoing embodiments.

Operation S730: obtain at least one transform sub-block based on partitioning the target sub-block.

In some embodiments, the target sub-block may be partitioned according to a set partition policy, to obtain the at least one transform sub-block. The set partition policy includes: at least one of a height and a width of a transform sub-block obtained through partition is an integer power of 2. For a specific partition mode, reference may be made to the technical solution of the foregoing embodiments.

Operation S740: obtain a quantization coefficient block based on transforming and quantizing the at least one transform sub-block, and encoding based on the quantization coefficient block.

In some embodiments, entropy coding processing may be performed on the quantization coefficient block, and information about the obtained at least one transform sub-block is encoded, to obtain an encoded bitstream, and then the bitstream is transmitted to a decoder side.

Implementation details of the video encoding method shown in FIG. 7 are similar to the implementation details of the video decoding method in the foregoing embodiments, and details are not described herein again.

In conclusion, with the technical solution of the embodiments of this application, a sub-block obtained by partitioning a coding block may be further partitioned, to adapt to various residual distribution situations. Specifically, a size of the sub-block obtained by partitioning the coding block may be in a proportion, for example, 1, 1/4, 1/2, 3/4, or 1/8, to a size of the coding block in which the sub-block is located in a corresponding direction. During encoding, only a residual of a specified sub-block area needs to be encoded and transmitted, and residuals of other areas do not need to be encoded and transmitted.

The following lists several embodiments of partitioning a coding block to obtain a sub-block according to this application.

As shown in FIG. 8A, a width and a height of a sub-block are both 1/4 of dimensions of the coding block in which the sub-block is located in corresponding directions, and a location of the sub-block may be any one of an upper left corner, an upper right corner, a lower left corner, and a lower right corner of the coding block.

As shown in FIG. 8B, a width and a height of a sub-block are both 3/4 of dimensions of the coding block in which the sub-block is located in corresponding directions, and a location of the sub-block may be any one of an upper left corner, an upper right corner, a lower left corner, and a lower right corner of the coding block.

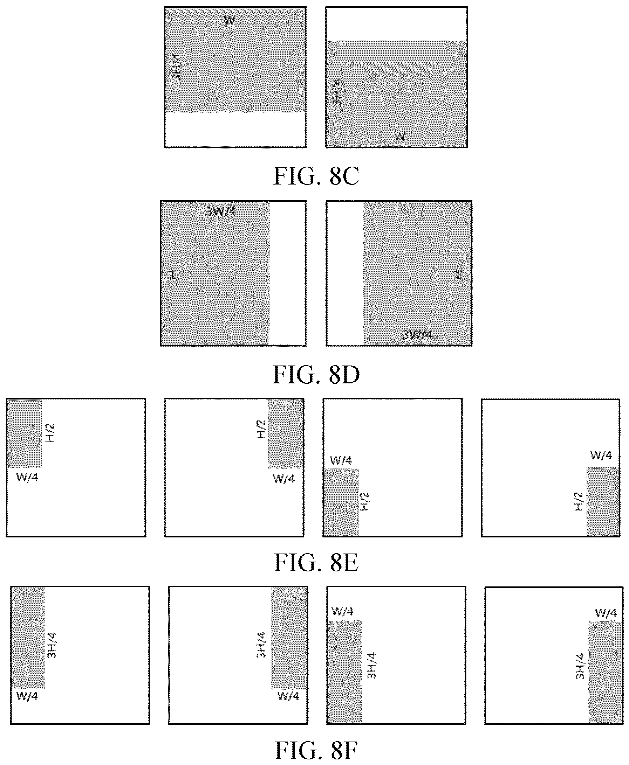

As shown in FIG. 8C, a width of a sub-block is equal to a width of the coding block in which the sub-block is located, a height of the sub-block is 3/4 of a height of the coding block in which the sub-block is located, and a location of the sub-block may be an upper side or a lower side of the coding block.

As shown in FIG. 8D, a height of a sub-block is equal to a height of the coding block in which the sub-block is located, a width of the sub-block is 3/4 of a width of the coding block in which the sub-block is located, and a location of the sub-block may be a left side or a right side of the coding block.

As shown in FIG. 8E, a width of a sub-block is 1/4 of a width of the coding block in which the sub-block is located, a height of the sub-block is 1/2 of a height of the coding block in which the sub-block is located, and a location of the sub-block may be any one of an upper left corner, an upper right corner, a lower left corner, and a lower right corner of the coding block.

As shown in FIG. 8F, a width of a sub-block is 1/4 of a width of the coding block in which the sub-block is located, a height of the sub-block is 3/4 of a height of the coding block in which the sub-block is located, and a location of the sub-block may be any one of an upper left corner, an upper right corner, a lower left corner, and a lower right corner of the coding block.

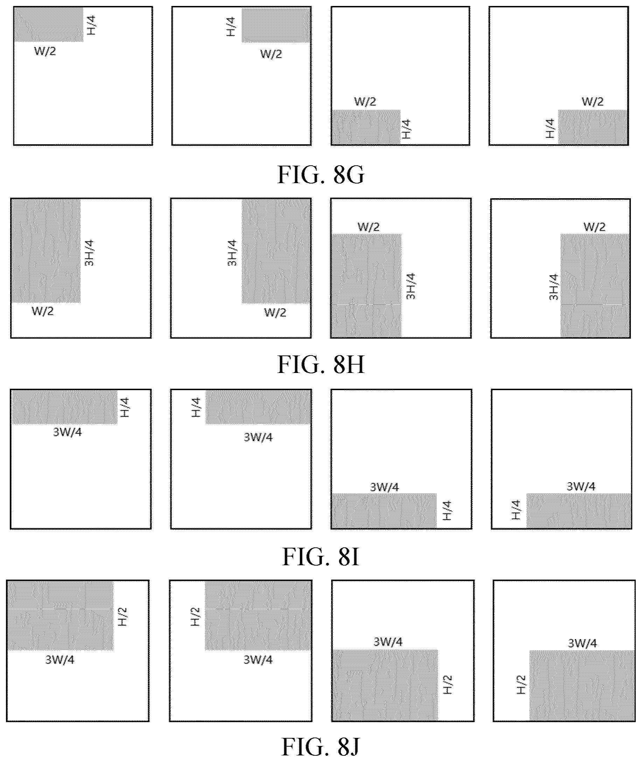

As shown in FIG. 8G, a width of a sub-block is 1/2 of a width of the coding block in which the sub-block is located, a height of the sub-block is 1/4 of a height of the coding block in which the sub-block is located, and a location of the sub-block may be any one of an upper left corner, an upper right corner, a lower left corner, and a lower right corner of the coding block.

As shown in FIG. 8H, a width of a sub-block is 1/2 of a width of the coding block in which the sub-block is located, a height of the sub-block is 3/4 of a height of the coding block in which the sub-block is located, and a location of the sub-block may be any one of an upper left corner, an upper right corner, a lower left corner, and a lower right corner of the coding block.

As shown in FIG. 8I, a width of a sub-block is 3/4 of a width of the coding block in which the sub-block is located, a height of the sub-block is 1/4 of a height of the coding block in which the sub-block is located, and a location of the sub-block may be any one of an upper left corner, an upper right corner, a lower left corner, and a lower right corner of the coding block.

As shown in FIG. 8J, a width of a sub-block is 3/4 of a width of the coding block in which the sub-block is located, a height of the sub-block is 1/2 of a height of the coding block in which the sub-block is located, and a location of the sub-block may be any one of an upper left corner, an upper right corner, a lower left corner, and a lower right corner of the coding block.

The partition modes shown in FIG. 8A to FIG. 8J may be used independently, may be used in combination, or may be used in combination with the partition modes shown in FIG. 4.

After a sub-block is obtained through partition, a transform combination of the sub-block may be selected from a DCT2, a DCT5, a DCT8, a DST1, a DST7, and a transform skip (TS). In addition, a sub-block that needs to be encoded may be transformed as an entire transform block, or may be partitioned into a plurality of transform blocks and then transformed.

A mode of further partitioning a sub-block in the embodiments of this application is described below by using an example in which a transform combination is selected from the DCT8 and the DST7.

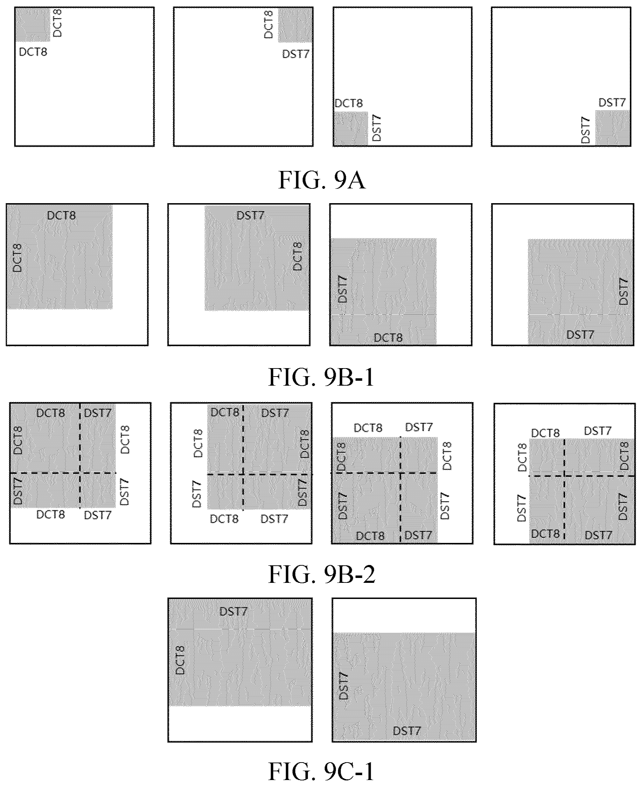

As shown in FIG. 9A, a width and a height of a sub-block are both 1/4 of dimensions of a coding block in which the sub-block is located in corresponding directions. In this case, the sub-block may be transformed as an entire transform block. A transform combination thereof may be randomly selected from the DCT8 and the DST7.

As shown in FIG. 9B-1, a width and a height of a sub-block are both 3/4 of dimensions of a coding block in which the sub-block is located in corresponding directions. In this case, the sub-block may be transformed as an entire transform block. A transform combination thereof may be randomly selected from the DCT8 and the DST7.

As shown in FIG. 9B-2, a width and a height of a sub-block are both 3/4 of dimensions of a coding block in which the sub-block is located in corresponding directions. In this case, the sub-block may be further partitioned into four transform blocks (dashed lines in the figure indicate partition boundaries). Transform combinations of the four transform blocks may be randomly selected from the DCT8 and the DST7.

As shown in FIG. 9C-1, a width of a sub-block is equal to a width of a coding block in which the sub-block is located, and a height of the sub-block is 3/4 of a height of the coding block in which the sub-block is located. In this case, the sub-block may be transformed as an entire transform block. A transform combination thereof may be randomly selected from the DCT8 and the DST7.

As shown in FIG. 9C-2, a width of a sub-block is equal to a width of a coding block in which the sub-block is located, and a height of the sub-block is 3/4 of a height of the coding block in which the sub-block is located. In this case, the sub-block may be further partitioned into three transform blocks (dashed lines in the figure indicate partition boundaries). Transform combinations of the three transform blocks may be randomly selected from the DCT8 and the DST7.

As shown in FIG. 9D-1, a height of a sub-block is equal to a height of a coding block in which the sub-block is located, and a width of the sub-block is 3/4 of a width of the coding block in which the sub-block is located. In this case, the sub-block may be transformed as an entire transform block. A transform combination thereof may be randomly selected from the DCT8 and the DST7.

As shown in FIG. 9D-2, a height of a sub-block is equal to a height of a coding block in which the sub-block is located, and a width of the sub-block is 3/4 of a width of the coding block in which the sub-block is located. In this case, the sub-block may be further partitioned into three transform blocks (dashed lines in the figure indicate partition boundaries). Transform combinations of the three transform blocks may be randomly selected from the DCT8 and the DST7.

As shown in FIG. 9E, a width of a sub-block is 1/4 of a width of a coding block in which the sub-block is located, and a height of the sub-block is 1/2 of a height of the coding block in which the sub-block is located. In this case, the sub-block may be transformed as an entire transform block. A transform combination thereof may be randomly selected from the DCT8 and the DST7.

As shown in FIG. 9F-1, a width of a sub-block is 1/4 of a width of a coding block in which the sub-block is located, and a height of the sub-block is 3/4 of a height of the coding block in which the sub-block is located. In this case, the sub-block may be transformed as an entire transform block. A transform combination thereof may be randomly selected from the DCT8 and the DST7.

As shown in FIG. 9F-2, a width of a sub-block is 1/4 of a width of a coding block in which the sub-block is located, and a height of the sub-block is 3/4 of a height of the coding block in which the sub-block is located. In this case, the sub-block may be further partitioned into two transform blocks (a dashed line in the figure indicates a partition boundary). Transform combinations of the two transform blocks may be randomly selected from the DCT8 and the DST7.

As shown in FIG. 9G, a width of a sub-block is 1/2 of a width of a coding block in which the sub-block is located, and a height of the sub-block is 1/4 of a height of the coding block in which the sub-block is located. In this case, the sub-block may be transformed as an entire transform block. A transform combination thereof may be randomly selected from the DCT8 and the DST7.

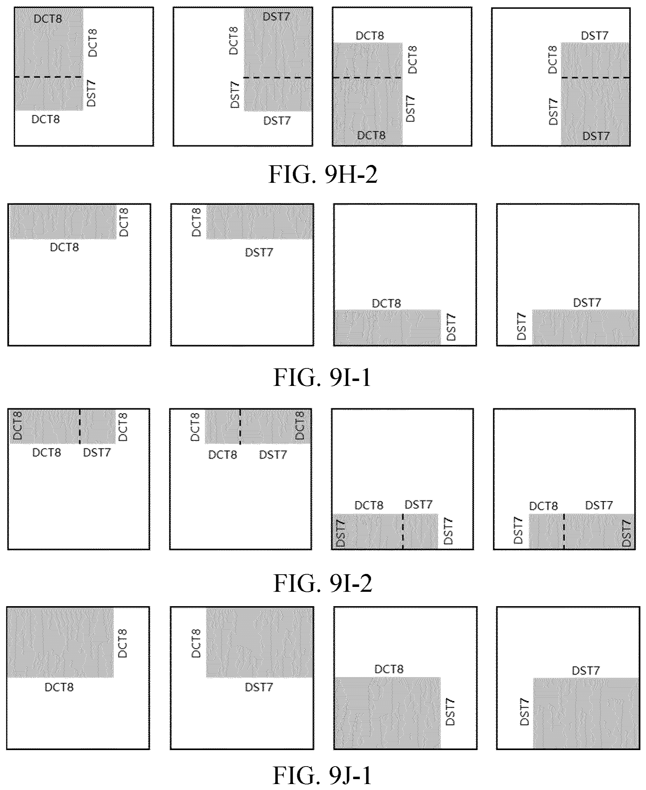

As shown in FIG. 9H-1, a width of a sub-block is 1/2 of a width of a coding block in which the sub-block is located, and a height of the sub-block is 3/4 of a height of the coding block in which the sub-block is located. In this case, the sub-block may be transformed as an entire transform block. A transform combination thereof may be randomly selected from the DCT8 and the DST7.

As shown in FIG. 9H-2, a width of a sub-block is 1/2 of a width of a coding block in which the sub-block is located, and a height of the sub-block is 3/4 of a height of the coding block in which the sub-block is located. In this case, the sub-block may be further partitioned into two transform blocks (a dashed line in the figure indicates a partition boundary). Transform combinations of the two transform blocks may be randomly selected from the DCT8 and the DST7.

As shown in FIG. 9I-1, a width of a sub-block is 3/4 of a width of a coding block in which the sub-block is located, and a height of the sub-block is 1/4 of a height of the coding block in which the sub-block is located. In this case, the sub-block may be transformed as an entire transform block. A transform combination thereof may be randomly selected from the DCT8 and the DST7.

As shown in FIG. 9I-2, a width of a sub-block is 3/4 of a width of a coding block in which the sub-block is located, and a height of the sub-block is 1/4 of a height of the coding block in which the sub-block is located. In this case, the sub-block may be further partitioned into two transform blocks (a dashed line in the figure indicates a partition boundary). Transform combinations of the two transform blocks may be randomly selected from the DCT8 and the DST7.

As shown in FIG. 9J-1, a width of a sub-block is 3/4 of a width of a coding block in which the sub-block is located, and a height of the sub-block is 1/2 of a height of the coding block in which the sub-block is located. In this case, the sub-block may be transformed as an entire transform block. A transform combination thereof may be randomly selected from the DCT8 and the DST7.

As shown in FIG. 9J-2, a width of a sub-block is 3/4 of a width of a coding block in which the sub-block is located, and a height of the sub-block is 1/2 of a height of the coding block in which the sub-block is located. In this case, the sub-block may be further partitioned into two transform blocks (a dashed line in the figure indicates a partition boundary). Transform combinations of the two transform blocks may be randomly selected from the DCT8 and the DST7.

In some embodiments of this application, a horizontal transform mode and a vertical transform mode of a transform block in a sub-block each may alternatively be set to the DCT2 transform mode. Alternatively, a horizontal transform mode and a vertical transform mode of a transform block in a sub-block each may be set to the TS mode, namely, the transform skip mode.

In some embodiments of this application, a transform combination of the transform block in the sub-block may be selected from the DCT2, the DCT5, the DCT8, the DST1, the DST7, and the TS. However, if a size of the transform block in the sub-block is greater than a specified threshold, a transform mode in a corresponding direction may be forcibly modified to the DCT2. For example, when a width of the transform block in the sub-block is greater than 8, the horizontal transform mode may be forcibly modified to the DCT2. When a height of the transform block in the sub-block is greater than 8, the vertical transform mode may be forcibly modified to the DCT2.

In the technical solutions of the foregoing embodiments of this application, partition modes of the SBT technology are extended, so that flexibility of the sub-block transform technology can be improved, thereby improving encoding and decoding performance.

The following describes apparatus embodiments of this application, which may be configured to perform the methods in the foregoing embodiments of this application. For details not disclosed in the apparatus embodiments of this application, reference may be made to the foregoing method embodiments of this application.

FIG. 10 is a block diagram of a video decoding apparatus according to some embodiments of this application. The video decoding apparatus may be disposed in a device having a computing processing function, for example, may be disposed in a terminal device or a server.

Referring to FIG. 10, the video decoding apparatus 1000 according to some embodiments of this application includes: an obtaining unit 1002, a decoding unit 1004, and a processing unit 1006.

The obtaining unit 1002 is configured to obtain block partition information corresponding to a to-be-decoded coding block, the block partition information including information about a target sub-block, and the target sub-block being obtained by partitioning the coding block according to a residual block corresponding to the coding block, wherein entropy decoding is to be performed on the target sub-block. The decoding unit 1004 is configured to decode, from the bitstream, information about at least one transform sub-block obtained by partitioning the target sub-block, and obtain an inverse quantization coefficient sub-block respectively corresponding to the at least one transform sub-block based on entropy decoding and inverse quantizing the at least one transform sub-block with the information about the at least one transform sub-block. The processing unit 1006 is configured to generate a reconstructed residual corresponding to the coding block based on inverse transforming the inverse quantization coefficient sub-block respectively corresponding to the at least transform sub-block, a residual of an area other than the target sub-block in the coding block is inferred to be zero.

In some embodiments of this application, based on the foregoing solution, the information about the target sub-block includes width information and height information of the target sub-block; the width information of the target sub-block includes a first ratio of a width of the target sub-block to a width of the coding block; and the height information of the target sub-block includes a second ratio of a height of the target sub-block to a height of the coding block.

In some embodiments of this application, based on the foregoing solution, a value of the first ratio and a value of the second ratio each are any one of the following: 1, 1/4, 1/2, 3/4, and 1/8.

In some embodiments of this application, based on the foregoing solution, the width of the target sub-block is 1/4 of the width of the coding block, and the height of the target sub-block is 1/4 of the height of the coding block; or

the width of the target sub-block is 3/4 of the width of the coding block, and the height of the target sub-block is 3/4 of the height of the coding block; or

the width of the target sub-block is equal to the width of the coding block, and the height of the target sub-block is 3/4 of the height of the coding block; or

the width of the target sub-block is 3/4 of the width of the coding block, and the height of the target sub-block is equal to the height of the coding block; or

the width of the target sub-block is 1/4 of the width of the coding block, and the height of the target sub-block is 1/2 of the height of the coding block; or

the width of the target sub-block is 1/4 of the width of the coding block, and the height of the target sub-block is 3/4 of the height of the coding block; or

the width of the target sub-block is 1/2 of the width of the coding block, and the height of the target sub-block is 1/4 of the height of the coding block; or

the width of the target sub-block is 1/2 of the width of the coding block, and the height of the target sub-block is 3/4 of the height of the coding block; or

the width of the target sub-block is 3/4 of the width of the coding block, and the height of the target sub-block is 1/4 of the height of the coding block; or

the width of the target sub-block is 3/4 of the width of the coding block, and the height of the target sub-block is 1/2 of the height of the coding block.

In some embodiments of this application, based on the foregoing solution, the information about the target sub-block further includes location information of the target sub-block, and the location information is configured for indicating a location of the target sub-block in the coding block.

In some embodiments of this application, based on the foregoing solution, the location of the target sub-block in the coding block includes any one of the following: an upper left corner of the coding block, an upper right corner of the coding block, a lower left corner of the coding block, a lower right corner of the coding block, an upper side of the coding block, a lower side of the coding block, a left side of the coding block, and a right side of the coding block.

In some embodiments of this application, based on the foregoing solution, a size of a transform sub-block obtained by partitioning the target sub-block meets the following condition: at least one of a height and a width of the transform sub-block is an integer power of 2.

In some embodiments of this application, based on the foregoing solution:

if the width of the target sub-block is 3/4 of the width of the coding block and the height of the target sub-block is 3/4 of the height of the coding block, the target sub-block is partitioned into four transform sub-blocks;

if the width of the target sub-block is equal to the width of the coding block and the height of the target sub-block is 3/4 of the height of the coding block, the target sub-block is partitioned into three transform sub-blocks in a height direction;

if the width of the target sub-block is 3/4 of the width of the coding block and the height of the target sub-block is equal to the height of the coding block, the target sub-block is partitioned into three transform sub-blocks in a width direction;

if the width of the target sub-block is 1/4 of the width of the coding block and the height of the target sub-block is 3/4 of the height of the coding block, the target sub-block is partitioned into two transform sub-blocks in a height direction;

if the width of the target sub-block is 1/2 of the width of the coding block and the height of the target sub-block is 3/4 of the height of the coding block, the target sub-block is partitioned into two transform sub-blocks in a height direction;

if the width of the target sub-block is 3/4 of the width of the coding block and the height of the target sub-block is 1/4 of the height of the coding block, the target sub-block is partitioned into two transform sub-blocks in a width direction; or

if the width of the target sub-block is 3/4 of the width of the coding block and the height of the target sub-block is 1/2 of the height of the coding block, the target sub-block is partitioned into two transform sub-blocks in a width direction.

In some embodiments of this application, based on the foregoing solution, the processing unit 1006 is configured to: select a horizontal transform mode and a vertical transform mode corresponding to each inverse quantization coefficient sub-block from set transform modes, the set transform modes including: a DCT2, a DCT5, a DCT8, a DST1, a DST7, and a transform skip mode; and perform inverse transform processing on each inverse quantization coefficient sub-block according to the horizontal transform mode and the vertical transform mode corresponding to each inverse quantization coefficient sub-block.

In some embodiments of this application, based on the foregoing solution, the processing unit 1006 is further configured to: replace, in a case that a first inverse quantization coefficient sub-block whose width is greater than a set threshold exists in the inverse quantization coefficient sub-block corresponding to the at least one transform sub-block, a horizontal transform mode of the first inverse quantization coefficient sub-block with the DCT2 transform mode; and replace, in a case that a second inverse quantization coefficient sub-block whose height is greater than a set threshold exists in the inverse quantization coefficient sub-block corresponding to the at least one transform sub-block, a vertical transform mode of the second inverse quantization coefficient sub-block with the DCT2 transform mode.

FIG. 11 is a block diagram of a video encoding apparatus according to some embodiments of this application. The video encoding apparatus may be disposed in a device having a computing processing function, for example, may be disposed in a terminal device or a server.

Referring to FIG. 11, the video coding apparatus 1100 according to some embodiments of this application includes: an obtaining unit 1102, a determining unit 1104, a partitioning unit 1106, and an encoding unit 1108.

The obtaining unit 1102 is configured to obtain a residual block corresponding to a current to-be-encoded block. The determining unit 1104 is configured to determine corresponding block partition information according to the residual block, the block partition information including information about a target sub-block on which entropy coding is to be performed, and the target sub-block being obtained by partitioning the to-be-encoded block according to the residual block corresponding to the to-be-encoded block. The partitioning unit 1106 is configured to obtain at least one transform sub-block based on partitioning the target sub-block. The encoding unit 1108 is configured to obtain a quantization coefficient block based on transforming and quantizing the at least one transform sub-block, and encode based on the quantization coefficient block.

FIG. 12 is a schematic diagram of a structure of a computer system of an electronic device configured to implement an embodiment of this application.

The computer system 1200 of the electronic device shown in FIG. 12 is merely an example, and does not to constitute any limitation on a function and the use scope of this embodiment of this application.

As shown in FIG. 12, the computer system 1200 includes a central processing unit (CPU) 1201, which may perform various suitable actions and processing based on a program stored in a read-only memory (ROM) 1202 or a program loaded from a storage part 1208 to a random access memory (RAM) 1203, for example, may perform the methods described in the foregoing embodiments. The RAM 1203 further stores various programs and data required by a system operation. The CPU 1201, the ROM 1202, and the RAM 1203 are connected to each other through a bus 1204. An input/output (I/O) interface 1205 is also connected to the bus 1204.

The following components are connected to the I/O interface 1205: an input part 1206 including a keyboard, a mouse, and the like; an output part 1207 including a cathode ray tube (CRT), a liquid crystal display (LCD), a speaker, and the like; a storage part 1208 including a hard disk and the like; and a communication part 1209 including a network interface card such as a local area network (LAN) card and a modem. The communication part 1209 performs communication processing via a network such as the Internet. A driver 1210 is also connected to the I/O interface 1205 as required. A removable medium 1211, for example, a magnetic disk, an optical disc, a magneto-optical disc, or a semiconductor memory, is installed on the driver 1210 as required, so that a computer program read from the removable medium 1211 is installed into the storage part 1208 as required.

Particularly, according to an embodiment of this application, the processes described above by referring to the flowcharts may be implemented as computer software programs. For example, an embodiment of this application includes a computer program product. The computer program product includes a computer program stored in a computer-readable medium. The computer program includes a computer program configured for performing the methods shown in the flowcharts. In such an embodiment, the computer program may be downloaded and installed from a network through the communication part 1209 and/or installed from the removable medium 1211. When the computer program is executed by the central processing unit (CPU) 1201, various functions defined in the system of this application are performed.

The computer-readable medium shown in this embodiment of this application may be a computer-readable signal medium or a computer-readable storage medium or any combination thereof. The computer-readable storage medium may be, for example, but is not limited to, an electric, magnetic, optical, electromagnetic, infrared, or semi-conductive system, apparatus, or component, or any combination thereof. A more specific example of the computer-readable storage medium may include but is not limited to: electrical connection having one or more wires, a portable computer magnetic disk, a hard disk, a random access memory (RAM), a read-only memory (ROM), an erasable programmable read-only memory (EPROM), a flash memory, an optical fiber, a compact disk read-only memory (CD-ROM), an optical storage device, a magnetic storage device, or any appropriate combination thereof. In this application, the computer-readable storage medium may be any tangible medium containing or storing a program, and the program may be used by or used in combination with an instruction execution system, an apparatus, or a device. In this application, a computer-readable signal medium may include a data signal in a baseband or propagated as a part of a carrier wave, the data signal carrying a computer-readable computer program. A data signal propagated in such a way may assume a plurality of forms, including, but not limited to, an electromagnetic signal, an optical signal, or any appropriate combination thereof. The computer-readable signal medium may be further any computer-readable medium in addition to a computer-readable storage medium. The computer-readable medium may send, propagate, or transmit a program that is used by or used in combination with an instruction execution system, apparatus, or device. The computer program included in the computer-readable medium may be transmitted by using any suitable medium, including but not limited to: a wireless medium, a wire, or the like, or any suitable combination thereof.

The flowcharts and block diagrams in the accompanying drawings illustrate possible system architectures, functions, and operations that may be implemented by a system, a method, and a computer program product according to various embodiments of this application. Each box in a flowchart or a block diagram may represent a module, a program segment, or a part of a code. The module, the program segment, or the part of a code includes one or more executable instructions configured for implementing specified logic functions. In some implementations used as substitutes, functions annotated in boxes may alternatively be occur in a sequence different from that annotated in an accompanying drawing. For example, actually two boxes shown in succession may be performed basically in parallel, and sometimes the two boxes may be performed in a reverse sequence. This is determined by a related function. Each box in a block diagram or a flowchart and a combination of boxes in the block diagram or the flowchart may be implemented by using a dedicated hardware-based system configured to perform a specified function or operation, or may be implemented by using a combination of dedicated hardware and a computer program.

Related units described in the embodiments of this application may be implemented in a software manner, or may be implemented in a hardware manner, and the unit described can also be disposed in a processor. Names of these units do not constitute a limitation on the units in a case.

In another aspect, an embodiment of this application further provides a computer-readable medium. The computer-readable medium may be included in the electronic device described in the foregoing embodiment. The computer-readable medium may alternatively exist separately and not be assembled into the electronic device. The foregoing computer-readable medium carries one or more computer programs, the one or more computer programs, when executed by the electronic device, causing the electronic device to implement the method described in the foregoing embodiments.

An embodiment of this application further provides a non-volatile computer-readable storage medium, the computer-readable storage medium having a bitstream stored therein, and the bitstream being generated by using the foregoing video encoding method described in this application.

Although a plurality of modules or units of a device configured to perform actions are described in the foregoing detailed description, such division is not mandatory. Actually, according to the implementations of this application, the features and functions of two or more modules or units described above may be specifically implemented in one module or unit. Conversely, features and functions of one module or unit described above may be further divided into a plurality of modules or units for implementation.

Through the descriptions of the foregoing implementations, a person skilled in the art easily understands that the exemplary implementations described herein may be implemented through software, or may be implemented through software located in combination with necessary hardware. Therefore, the technical solutions of the embodiments of this application may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the methods according to the embodiments of this application.

After considering the specification and practicing the disclosed embodiments, a person skilled in the art may easily conceive of other implementations of this application. This application is intended to cover any variations, uses or adaptation of this application following the general principles of this application, and includes the well-known knowledge and conventional technical means in the art and undisclosed in this application.

This application is not limited to the precise structures described above and shown in the accompanying drawings, and various modifications and changes can be made without departing from the scope of this application. The scope of this application is subject only to the appended claims.

## Claims

1. A video decoding method, performed by a computer device, the method comprising:

   obtaining, from a bitstream, block partition information corresponding to a to-be-decoded coding block, the block partition information comprising information about a target sub-block, and the target sub-block being obtained by partitioning the coding block according to a residual block corresponding to the coding block, wherein entropy decoding is to be performed on the target sub-block;
decoding, from the bitstream, information about at least one transform sub-block obtained by partitioning the target sub-block;
obtaining an inverse quantization coefficient sub-block respectively corresponding to the at least one transform sub-block based on entropy decoding and inverse quantizing the at least one transform sub-block with the information about the at least one transform sub-block; and
generating a reconstructed residual corresponding to the coding block based on inverse transforming the inverse quantization coefficient sub-block respectively corresponding to the at least one transform sub-block, a residual of an area other than the target sub-block in the coding block is inferred to be zero.

2. The video decoding method according to claim 1, wherein the information about the target sub-block comprises width information and height information of the target sub-block;

   the width information of the target sub-block comprises a first ratio of a width of the target sub-block to a width of the coding block; and
   the height information of the target sub-block comprises a second ratio of a height of the target sub-block to a height of the coding block.

3. The video decoding method according to claim 2, wherein a value of the first ratio and a value of the second ratio are each any one of: 1, 1/4, 1/2, 3/4, and 1/8.

4. The video decoding method according to claim 3, wherein

   the width of the target sub-block is 1/4 of the width of the coding block, and the height of the target sub-block is 1/4 of the height of the coding block; or
   the width of the target sub-block is 3/4 of the width of the coding block, and the height of the target sub-block is 3/4 of the height of the coding block; or
   the width of the target sub-block is equal to the width of the coding block, and the height of the target sub-block is 3/4 of the height of the coding block; or
   the width of the target sub-block is 3/4 of the width of the coding block, and the height of the target sub-block is equal to the height of the coding block; or

the width of the target sub-block is 1/4 of the width of the coding block, and the height of the target sub-block is 1/2 of the height of the coding block; or

the width of the target sub-block is 1/4 of the width of the coding block, and the height of the target sub-block is 3/4 of the height of the coding block; or

the width of the target sub-block is 1/2 of the width of the coding block, and the height of the target sub-block is 1/4 of the height of the coding block; or

the width of the target sub-block is 1/2 of the width of the coding block, and the height of the target sub-block is 3/4 of the height of the coding block; or

the width of the target sub-block is 3/4 of the width of the coding block, and the height of the target sub-block is 1/4 of the height of the coding block; or

the width of the target sub-block is 3/4 of the width of the coding block, and the height of the target sub-block is 1/2 of the height of the coding block.

5. The video decoding method according to any one of claims 2 to 4, wherein the information about the target sub-block further comprises location information of the target sub-block that indicates a location of the target sub-block in the coding block.

6. The video decoding method according to claim 5, wherein the location of the target sub-block in the coding block comprises any one of the following: an upper left corner of the coding block, an upper right corner of the coding block, a lower left corner of the coding block, a lower right corner of the coding block, an upper side of the coding block, a lower side of the coding block, a left side of the coding block, or a right side of the coding block.

7. The video decoding method according to claim 1, wherein the information about the at least one transform sub-block comprises width information, height information, and location information of each of the at least one transform sub-block.

8. The video decoding method according to claim 1, wherein a size of the at least one transform sub-block obtained by partitioning the target sub-block meets a condition that at least one of a height and a width of the transform sub-block is an integer power of 2.

9. The video decoding method according to claim 8, wherein

when a width of the target sub-block is 3/4 of a width of the coding block and a height of the target sub-block is 3/4 of a height of the coding block, the target sub-block is partitioned into four transform sub-blocks;

when a width of the target sub-block is equal to a width of the coding block and a height of the target sub-block is 3/4 of a height of the coding block, the target sub-block is partitioned into three transform sub-blocks in a height direction;

when a width of the target sub-block is 3/4 of a width of the coding block and a height of the target sub-block is equal to a height of the coding block, the target sub-block is partitioned into three transform sub-blocks in a width direction;

when a width of the target sub-block is 1/4 of a width of the coding block and a height of the target sub-block is 3/4 of the height of the coding block, the target sub-block is partitioned into two transform sub-blocks in a height direction;

when a width of the target sub-block is 1/2 of a width of the coding block and a height of the target sub-block is 3/4 of a height of the coding block, the target sub-block is partitioned into two transform sub-blocks in a height direction;

when a width of the target sub-block is 3/4 of a width of the coding block and a height of the target sub-block is 1/4 of a height of the coding block, the target sub-block is partitioned into two transform sub-blocks in a width direction; or

when a width of the target sub-block is 3/4 of a width of the coding block and a height of the target sub-block is 1/2 of a height of the coding block, the target sub-block is partitioned into two transform sub-blocks in a width direction.

10. The video decoding method according to claim 1, wherein the inverse transforming comprises:

selecting, from set transform modes, a horizontal transform mode and a vertical transform mode corresponding to each inverse quantization coefficient sub-block, wherein the set transform modes comprise one or more of: a DCT2, a DCT5, a DCT8, a DST1, a DST7, and a transform skip mode; and

inverse transforming each inverse quantization coefficient sub-block according to the horizontal transform mode and the vertical transform mode corresponding to each inverse quantization coefficient sub-block.

11. The video decoding method according to claim 10, further comprising:

replacing, when a width of a first inverse quantization coefficient sub-block in the inverse quantization coefficient sub-block corresponding to the at least one transform sub-block is greater than a first set threshold, a horizontal transform mode of the first inverse quantization coefficient sub-block with the DCT2 transform mode; and replacing, when a height of a second inverse quantization coefficient sub-block in the inverse quantization coefficient sub-block corresponding to the at least one transform sub-block is greater than a second set threshold, a vertical transform mode of the second inverse quantization coefficient sub-block with the DCT2 transform mode.

12. A video encoding method, performed by a computer device, the method comprising:

obtaining a residual block corresponding to a current to-be-coded block;
determining corresponding block partition information according to the residual block, the block partition information comprising information about a target sub-block on which entropy coding is to be performed, and the target sub-block being obtained by partitioning the to-be-encoded block according to the residual block corresponding to the to-be-encoded block;
obtaining at least one transform sub-block based on partitioning the target sub-block; and
obtaining a quantization coefficient block based on transforming and quantizing the at least one transform sub-block, and encoding based on the quantization coefficient block.

13. A video decoding apparatus, comprising:

an obtaining unit, configured to obtain, from a bitstream, block partition information corresponding to a to-be-decoded coding block, the block partition information comprising information about a target sub-block, and the target sub-block being obtained by partitioning the coding block according to the residual block corresponding to the coding block, wherein entropy decoding is to be performed on the target sub-block;
a decoding unit, configured to decode, from the bitstream, information about at least one transform sub-block obtained by partitioning the target sub-block, and obtain an inverse quantization coefficient sub-block respectively corresponding to the at least one transform sub-block based on entropy decoding and inverse quantizing the at least one transform sub-block with the information about the at least one transform sub-block; and
a processing unit, configured to generate a reconstructed residual corresponding to the coding block based on inverse transforming the inverse quantization coefficient sub-block respectively corresponding to the at least one transform sub-block, a residual of an area other than the target sub-block in the coding block is inferred to be zero.

14. A video encoding apparatus, comprising:

an obtaining unit, configured to obtain a residual block corresponding to a current to-be-coded block;
a determining unit, configured to determine corresponding block partition information according to the residual block, the block partition information comprising information about a target sub-block on which entropy coding is to be performed, and the target sub-block being obtained by partitioning the to-be-encoded block according to the residual block corresponding to the to-be-encoded block;
a partitioning unit, configured to obtain at least one transform sub-block based on partitioning the target sub-block; and
a coding unit, configured to obtain a quantization coefficient block based on transforming and quantizing the at least one transform sub-block, and encode based on the quantization coefficient block.

15. A computer-readable medium, having a computer program stored therein, the computer program, when executed by a processor, implementing the video decoding method according to any one of claims 1 to 11 or implementing the video encoding method according to claim 12.

16. An electronic device, comprising:

one or more processors; and
a memory, configured to store one or more computer programs, the one or more computer programs, when executed by the one or more processors, causing the electronic device to implement the video decoding method according to any one of claims 1 to 11 or implement the video encoding method according to claim 12.

17. A computer program product, the computer program product comprising computer instructions, the computer instructions being stored in a computer-readable storage medium, and a processor of an electronic device reading the computer instructions from the computer-readable storage medium and executing the computer instructions, to cause the electronic device to perform the video decoding method according to any one of claims 1 to 11 or perform the video encoding method according to claim 12.

18. A non-transitory computer-readable storage medium, storing a bitstream of a video, the bitstream being generated by using the video encoding method according to any one of claims 1-11.

FIG. 1

FIG. 2

FIG. 3

FIG. 4

FIG. 5

Obtain block partition information corresponding to a to-be-decoded coding block, the block partition information including information about a target sub-block, wherein entropy decoding is to be performed on the target sub-block — S610

Decode, from the bitstream, information about at least one transform sub-block obtained by partitioning the target sub-block — S620

Obtain an inverse quantization coefficient sub-block corresponding to the at least one transform sub-block based on entropy decoding and inverse quantizing the at least one transform sub-block with the information about the at least one transform sub-block — S630

Generate a reconstructed residual corresponding to the coding block based on inverse transforming the inverse quantization coefficient sub-block corresponding to the at least one transform sub-block — S640

FIG. 6

```
┌──────────────────────────────────────────────────┐        S710
│ Obtain a residual block corresponding to a current to-be- │
│                    encoded block                           │
└──────────────────────────────────────────────────┘
                          │
                          ▼
┌──────────────────────────────────────────────────┐        S720
│  Determine corresponding block partition information       │
│     according to the residual block, the block partition   │
│  information including information about a target sub-block │
│        on which entropy coding is to be performed          │
└──────────────────────────────────────────────────┘
                          │
                          ▼
┌──────────────────────────────────────────────────┐        S730
│   Obtain at least one transform sub-block based on         │
│           partitioning the target sub-block                │
└──────────────────────────────────────────────────┘
                          │
                          ▼
┌──────────────────────────────────────────────────┐        S740
│  Obtain a quantization coefficient block based on          │
│ transforming and quantizing the at least one transform sub-│
│   block, and encode based on the quantization coefficient  │
│                         block                              │
└──────────────────────────────────────────────────┘
```

## FIG. 7

## FIG. 8A

## FIG. 8B

FIG. 8C

FIG. 8D

FIG. 8E

FIG. 8F

FIG. 8G

FIG. 8H

FIG. 8I

FIG. 8J

FIG. 9A

FIG. 9B-1

FIG. 9B-2

FIG. 9C-1

FIG. 9C-2

FIG. 9D-1

FIG. 9D-2

FIG. 9E

FIG. 9F-1

FIG. 9F-2

FIG. 9G

FIG. 9H-1

FIG. 9H-2

FIG. 9I-1

FIG. 9I-2

FIG. 9J-1

FIG. 9J-2

FIG. 10

FIG. 11

1200

CPU 1201

ROM 1202

RAM 1203

1204

I/O interface 1205

Input part 1206

Output part 1207

Storage part 1208

Communication part 1209

Driver 1210

Removable medium 1211

FIG. 12

## INTERNATIONAL SEARCH REPORT

| International application No. |
|---|
| **PCT/CN2024/074646** |

**A. CLASSIFICATION OF SUBJECT MATTER**

H04N19/60(2014.01)i; H04N19/176(2014.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, CJFD, CNKI, VCN, ENTXTC, WPABSC, JVET, IEEE: 划分, 分割, 子块, 变换, 量化, 残差, 零, partition, divid+, SBT, Sub 1w Block, transform, quantization, residual, zero

**C. DOCUMENTS CONSIDERED TO BE RELEVANT**

| Category* | Citation of document, with indication, where appropriate, of the relevant passages | Relevant to claim No. |
|---|---|---|
| X | CN 114979655 A (TENCENT TECHNOLOGY (SHENZHEN) CO., LTD.) 30 August 2022 (2022-08-30) <br> description, paragraphs 39-125, and figures 3-6 | 1-8, 10-18 |
| X | CN 113632493 A (BEIJING BYTEDANCE NETWORK TECHNOLOGY CO., LTD. et al.) 09 November 2021 (2021-11-09) <br> description, paragraphs 18-320, and figures 1 and 2 | 1-8, 10-18 |
| X | ZHAO, Yin et al. "CE6: Sub-block Transform for Inter Blocks (CE6.4.1), JVET-M0140-V3" *Joint Video Experts Team (JVET) of ITU-T SG 16 WP 3 and ISO/IEC JTC 1/SC 29/WG 11 13th Meeting,* 16 January 2019 (2019-01-16), <br> section 1 | 1-8, 10-18 |
| X | US 2022109878 A1 (LG ELECTRONICS, INC.) 07 April 2022 (2022-04-07) <br> description, paragraphs 306-322, and figures 13-18 | 1-8, 10-18 |
| X | US 2022159276 A1 (LG ELECTRONICS, INC.) 19 May 2022 (2022-05-19) <br> description, paragraphs 152-305, and figures 5-6 | 1-8, 10-18 |
| A | CN 111277840 A (HUAWEI TECHNOLOGIES CO., LTD. et al.) 12 June 2020 (2020-06-12) <br> entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 April 2024** | **09 April 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/074646**

| Patent document cited in search report | | | Publication date (day/month/year) | Patent family member(s) | | | Publication date (day/month/year) |
|---|---|---|---|---|---|---|---|
| CN | 114979655 | A | 30 August 2022 | None | | | |
| CN | 113632493 | A | 09 November 2021 | WO | 2020182213 | A1 | 17 September 2020 |
| | | | | US | 2022007057 | A1 | 06 January 2022 |
| | | | | WO | 2020182207 | A1 | 17 September 2020 |
| | | | | US | 2022030240 | A1 | 27 January 2022 |
| US | 2022109878 | A1 | 07 April 2022 | KR | 20210102468 | A | 19 August 2021 |
| | | | | WO | 2020162690 | A1 | 13 August 2020 |
| US | 2022159276 | A1 | 19 May 2022 | US | 11805263 | B2 | 31 October 2023 |
| | | | | MX | 2022001645 | A | 06 April 2022 |
| | | | | WO | 2021025526 | A1 | 11 February 2021 |
| | | | | US | 2023421780 | A1 | 28 December 2023 |
| | | | | KR | 20220031061 | A | 11 March 2022 |
| CN | 111277840 | A | 12 June 2020 | WO | 2020114393 | A1 | 11 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310428833